# FASCICULE DE BREVET EUROPEEN

(11) **EP 0 953 288 B1**
(45) Date de publication et mention de la délivrance du brevet: **14.07.2004**
(21) Numéro de dépôt: 99400899.3
(22) Date de dépôt: 13.04.1999
(51) Int. Cl.: A21D 8/04

(54) **Levain panaire longue conservation prêt à l'emploi**
Gebrauchsfertiger Brotsauerteig mit langer Konservierungszeit
Ready-to-use bread leaven with long-lasting preservation

(30) Priorité: 15.04.1998 FR 9804701
(43) Date de publication de la demande: 03.11.1999
(73) Titulaire: LESAFFRE et Cie, F-75001 Paris (FR)
(72) Inventeur: Taillade, Patrick, 59420 Mouvaux (FR); LeJeune, Pascal, 59800 Lille (FR); Bryckaert, Emilie, 59700 Marcq en Baroeul (FR); Colavizza, Didier, 59163 Conde sur Escaut (FR)
(74) Mandataire: Koch, Gustave

(56) Documents cités:
- EP-A- 0 078 182
- EP-A- 0 636 692
- EP-A- 0 806 144
- GB-A- 993 751
- US-A- 4 666 719

## Description

La présente invention a pour objet un levain panaire conservant pendant plusieurs semaines, à basse température, toutes ses propriétés de fermentation de la pâte d'un pain au levain; elle vise également un procédé pour obtenir ce levain panaire.

Il est connu que, pour conserver les caractéristiques d'un levain naturel ou traditionnel, il est indispensable d'opérer plusieurs rafraîchissements quotidiens, ce qui rend le travail des boulangers fastidieux. A titre d'exemple, on peut noter que Parmentier, en 1778 dans *"Le Parfait Boulanger"* soulignait déjà "l'esclavage pénible où sont les boulangers, d'épier le jour et la nuit, ce qui se passe dans leurs levains, et la gêne continuelle de les rafraîchir trois à quatre fois, ce qui laisse à peine à cette classe d'artistes trois heures de suite au plus pour se livrer au repos."

Un rafraîchissement correspond à un nouvel apport de farine et d'eau au levain, apport qui correspond d'une part à une dilution du milieu en fermentation et d'autre part à un apport de substances fermentescibles. Pour réduire le nombre de rafraîchissements nécessaires et pour arriver plus ou moins bien à ce que les besoins quotidiens en prélèvements de levain pour la panification soient équivalents aux apports de farine et d'eau nécessaires à l'entretien du levain, il a été proposé d'avoir recours à des matériels souvent appelés "fermenteurs à levain liquide"; ces materiels permettent de maîtriser les températures et d'utiliser des phases de conservation à basse température. Ces systèmes dits "continus" sont particulièrement difficiles et délicats à gérer.

Un procédé de ce type consistant à ajouter au levain des quantités additionnelles de ses composants et à prélèver simultanément une quantité équivalente de levain fermenté prêt à être employé en panification est décrit, par exemple, dans le brevet britannique GB 993 751.

Un problème non résolu à ce jour est de présenter au boulanger un levain prêt à l'emploi, c'est-à-dire un levain désigné par l'expression "tout point" selon la terminologie traditionnelle française, qui se conserve, sans aucune intervention, à basse température plusieurs semaines sans perte de ses caractéristiques.

On sait que la panification au levain permet d'obtenir:
◆ une flaveur particulière appréciée, notamment caractérisée par une odeur aigrelette ou acétique de la mie;
◆ un pain ayant une texture particulière;
◆ un pain se conservant plus longtemps.

Ces caractéristiques de flaveur et de texture sont dues à la fermentation opérée par les bactéries et levures du levain. Elles font que le pain au levain est un pain recherché par le consommateur.

Les méthodes de panification utilisant un levain préparé selon les techniques connues souffrent de deux inconvénients majeurs:
◆ la difficulté de réaliser un levain ayant des caractéristiques identiques lors de chaque panification, y compris dans les systèmes de fermentation dits "continus" avec apports et prélèvements successifs ou continus,
◆ la faible durée de vie de ce levain, même à basse température; en effet, en l'absence de tout rafraîchissement, une acidification trop importante se développe et provoque plus ou moins rapidement la disparition dans le levain de tout microorganisme viable, c'est-à-dire capable de se multiplier ou de fermenter.

Pour pallier au premier inconvénient, la profession a eu recours à diverses techniques dont celle de la préparation du levain en une seule étape à l'aide de concentrés secs de microorganismes nommés " starters " tels que les ferments pour panification décrits dans la demande de brevet européen EP 0 636 692 A1. Ces concentrés de microorganismes ou starters peuvent également être présentés sous forme pâteuse. Dans ce cas, l'amélioration de la conservation est recherchée par l'augmentation des matières sèches de la culture de microorganismes, à environ 60-80% de matières sèches, sans emploi d'une technique de séchage comme la lyophilisation.

Cette forme pâteuse est souvent obtenue par l'emploi d'un support constitué par des grains ou par une mouture grossière de céréales, comme cela semble être le cas pour les starters allemands de marque déposée BÖCKER REINZUCHT - SAUERTEIG®. Ces starters sont utilisés pour ensemencer des pâtes et permettent d'obtenir un levain prêt à l'emploi après une fermentation de 15 à 24 heures entre 20 et 30°C. Ces levains, obtenus par ensemencement avec les starters définis ci-dessus permettent d'obtenir des pains au levain de bonne qualité, mais ces levains ne peuvent pas être conservés sans rafraîchissements. Soit ils sont utilisés comme levains-chef ou pâtes-mères et conservés par des rafraîchissements réguliers, soit un nouveau levain doit être préparé par un ensemencement d'une pâte avec un starter pour chaque panification.

Ces starters peuvent également se présenter sous forme liquide, c'est-à-dire sous forme de ferments céréaliers liquides, c'est-à-dire de suspensions de microorganismes dans un milieu de culture. De tels ferments céréaliers sont par exemple décrits dans le brevet français FR 82 07047 ou dans le brevet européen EP 0 093 635 B1.

Ces ferments céréaliers, constitués par l'association d'une souche de Lactobacille et d'une souche de levure, sont cultivés conjointement sur un milieu aqueux à base de farine de blé; cette farine de blé dont l'amidon est hydrolysé, est diluée dans environ 7 à 10 fois son volume d'eau. Ces ferments céréaliers liquides, qui sont des suspensions de microorganismes ou concentrats fermentaires destinés à ensemencer le levain, conservent au maximum leur viabilité 3 semaines à 4°C.

Une variante de cette technique est celle décrite dans les demandes de brevet EP 0 684 306 A1, EP 0 684 307 A1, EP 0 684 308 A1, EP 0 806 144 A2, et selon laquelle les microorganismes sont cultivés sur un milieu obtenu par la double hydrolyse, dans un mélange dilué aqueux, de l'amidon d'une part et d'une partie du gluten ou de manière plus générale des protéines de la ou des farine(s) mise(s) en oeuvre d'autre part.

Concernant le deuxième inconvénient, on rappelle que les méthodes de conservation traditionnelles telles que la congélation et surtout le séchage sont peu performantes car les microorganismes présents ont subi du fait du traitement de conservation une désorganisation plus ou moins importante de leurs membranes. Lors de la décongélation ou de la réhydratation, les microorganismes doivent reconstituer leurs membranes et reprendre leur activité métabolique en présence des importantes quantités de métabolites qu'ils ont produits et qui sont d'autant plus toxiques que les cellules ont été fragilisées par le traitement de conservation. Les levains déshydratés ou secs sont en fait des levains morts et n'ont qu'un rôle d'apports de molécules aromatiques.

Toutes les préparations à l'avance de levains prêts à l'emploi, connues, en l'absence de rafraîchissements, conduisent en quelques jours, même à 4°C, à des préparations extrêmement riches en acides, ne contenant pratiquement plus aucun microorganisme revivifiable et, en conséquence, incapables d'assurer la fermentation de la pâte d'un pain au levain.

Ces solutions proposées pour améliorer la conservation sont donc peu différentes quant à leur résultat de l'emploi de substituts ou farines pré-fermentées désactivées et déshydratées dont le seul rôle est d'apporter à la pâte lors du pétrissage de l'acide acétique et de l'acide lactique. Les pains obtenus par l'emploi de ces produits, qui ne contiennent pratiquement pas de microorganismes revivifiables, n'ont bien entendu en aucun cas la texture caractéristique et la flaveur complète d'un pain au levain lors de leur dégustation.

Il est remarquable qu'aucun des documents qui parlent de la conservation des levains ne fait état de la différence entre d'une part l'apport d'acide acétique, d'acide lactique et de manière générale de molécules aromatiques et d'autre part l'apport de microorganismes aptes à fermenter. Dans ces documents, aucun contrôle des microorganismes revivifiables après conservation n'est décrit.

C'est le cas notamment du brevet US 4,666,719, où il n'est donné aucune indication de viabilité dans le temps des cultures ou des levains qui sont mis en conservation. Il est d'ailleurs significatif que dans ce brevet US, le schéma de panification utilisé avec le levain objet de ce brevet est un schéma court avec moins de 3 heures de fermentation au total entre le commencement du pétrissage et la cuisson. Un tel schéma est trop court pour que les microorganismes d'un levain quel qu'il soit participent significativement à la levée de la pâte. Un tel procédé de panification n'est donc pas envisageable sans l'ajout d'une forte dose de levure de panification.

La présente invention a pour but, de par la composition du levain qui en est l'objet, et notamment les caractéristiques finales de ce levain, de stabiliser naturellement, à la fois les populations microbiennes et les caractéristiques physico-chimiques du levain pendant au moins 4 semaines, jusqu'à 8 semaines voire plus, dans des conditions de conservation classiques (température inférieure à 10°C, préférentiellement entre 0 et 4°C) tout en permettant l'utilisation dudit levain comme agent de fermentation directement au pétrissage lors de la fabrication d'un pain au levain, dans le cadre d'un schéma de fabrication direct, c'est-à-dire d'un schéma comportant un seul pétrissage, pour la fermentation et la levée de la pâte boulangère.

Le levain panaire stable et prêt à l'emploi, suivant l'invention, est obtenu par la mise en oeuvre :
a) d'au moins une farine de céréale non maltée,
b) de préférence en plus d'au moins une farine de céréale maltée apportant des amylases, ou toute source équivalente d'amylases,
c) d'eau qui peut être apportée par les préparations de microorganismes,
d) d'un ensemencement par au moins une préparation de bactéries lactiques hétérofermentaires, de préférence d'un ensemencement par au moins une préparation de bactéries lactiques hétérofermentaires et au moins une préparation de levures, ces ensemencements pouvant être de préférence complémentés par au moins un ensemencement par une préparation de bactéries lactiques homofermentaires.

Le levain stable suivant l'invention est caractérisé par le fait qu'il a un pH compris entre 4 et 4,3, qu'il apporte au moins 1 milliard de bactéries lactiques revivifiables par gramme et, de préférence, au moins 1 million, plus préférentiellement au moins 5 millions de levures revivifiables par gramme, pendant au moins 4 semaines, s'il est conservé à moins de 10°C de préférence à 4°C et qu'en conséquence, pendant ladite période de conservation d'au moins 4 semaines, il permet la fermentation d'une pâte boulangère selon un schéma direct d'obtention de pain au levain.

De façon avantageuse, le levain panaire selon l'invention présente, sans congélation, une conservation d'au moins 6 semaines à 4°C, et de préférence 2 mois à 4°C ou une conservation analogue déterminée selon tout barème temps/température équivalent.

Les levains obtenus selon la présente invention sont conformes à la réglementation française. Les levains ainsi fabriqués permettent un large éventail d'utilisations depuis des schémas directs courts de panification à relative courte durée de fermentation jusqu'aux schémas directs longs à longue durée de fermentation typique des pains au levain, étant rappelé qu'un schéma long est un schéma qui, entre le début du pétrissage et la fin de la cuisson, dure au moins 6 heures à température ambiante en climat tempéré.

Cette dernière utilisation est recommandée car elle permet à la flore du levain, maintenue vivante grâce à l'invention, de s'exprimer pleinement et de synthétiser dans la pâte un ensemble de molécules complexes qui généreront, en fermentation et à la cuisson, l'odeur, la saveur et la texture caractéristiques des pains au levain.

De préférence, le levain selon l'invention contient une farine de céréales maltées apportant un complément d'amylases et de sucres fermentescibles.

Les amylases et les sucres fermentescibles peuvent toutefois être apportés de manières différentes.

Les farines de céréales sont déjà une source de sucres fermentescibles et d'amylases. S'il y a un déficit d'amylases, celui-ci peut être complémenté par des apports exogènes d'amylases, par exemple par des apports d'amylases fongiques.

La pâte du levain est fermentée jusqu'à épuisement des sucres fermentescibles. Il est veillé à ce que le levain contienne assez d'amylases pour que soit dégradé par l'action desdits enzymes l'ensemble de l'amidon dégradable, essentiellement en maltose et aussi en glucose, dans un temps compatible avec la maîtrise du procédé.

L'amidon dégradable provient en principe essentiellement des grains d'amidon endommagés lors de la mouture de la céréale en farine, les grains d'amidon intacts n'étant, en principe, pas attaquables par les enzymes de la farine ou les amylases fongiques.

En d'autres termes, cet ajout d'amylases a uniquement pour but de dégrader l'amidon présent aisément attaquable par des amylases dans le cadre d'une fermentation panaire, mais en aucun cas de conduire à une hydrolyse quasi complète de l'amidon comme dans les procédés objet du brevet français FR 82 07047 ou de la demande de brevet européen EP 0 806 144 A2 déjà cités. Ces procédés antérieurs prévoient, de plus, généralement une étape de prégélatinisation de l'amidon (traitement à plus de 60°C) de manière à ce que celui-ci soit entièrement attaquable, étape qui est exclue dans le cadre de la réalisation de la phase levain de la présente invention.

Les caractéristiques du levain selon l'invention résident dans le fait:
que son pH est maîtrisé et ne descend pas au-dessous de 4, de préférence, au-dessous de 4,1 et, plus préférentiellement, en dessous de 4,2 pendant toute la durée de la conservation ;
que les quantités de sucres fermentescibles totaux apportés directement ou indirectement tant au niveau des préparations de microorganismes que de la phase levain sont telles que les quantités d'acides lactique et acétique formées restent contrôlées et ne dépassent pas les quantités d'acides lactique et acétique compatibles avec la conservation du levain au pH requis ;
que, de préférence, en fin de la phase levain, la quantité disponible de sucres fermentescibles est inférieure à 1 pour 1000 et reste inférieure à 1 pour 1000 pendant toute la conservation.

Selon un mode de réalisation avantageux, la teneur en matières sèches du levain est de 12 à 50% en poids, de préférence comprise entre 12 et 35%, et plus préférentiellement comprise entre 13 et 20%; elle est avantageusement supérieure à 15%.

Selon une caractéristique avantageuse, la teneur en acide lactique du levain est de 10 g à 50 g par kg de levain, de préférence comprise entre 10 et 30 g/kg et plus préférentiellement encore entre 15 et 30 g/kg, tandis que la teneur en acide acétique est avantageusement d'au moins 2 g par kg de levain, de préférence comprise entre 7 et 15 g/kg, plus préférentiellement entre 7 et 12 g/kg et plus préférentiellement encore entre 6 et 10 g/kg. La quantité totale des deux acides ne devra pas être supérieure à 52 g/kg, elle sera de préférence inférieure à 40 g/kg.

Selon une autre caractéristique avantageuse, le mélange d'acide acétique et d'acide lactique est dans un rapport au moins égal à 30%; en d'autres termes, le rapport acide acétique en poids sur acide lactique en poids est au moins égal à 30%, si la quantité totale d'acide lactique n'est pas supérieure à 30 g/kg.

L'ensemble des caractéristiques du levain prêt à l'emploi ou levain "tout point" sont sélectionnées de manière:
◆ d'une part à assurer la conservation du levain, c'est-à-dire en premier lieu la conservation d'une biomasse vivante comprenant au moins 1.10⁹ bactéries lactiques à la fin de la durée de conservation du levain,
◆ d'autre part à permettre, même après conservation du levain, la fermentation et la réalisation d'un pain au levain apprécié du consommateur.

Les travaux de recherche réalisés dans le cadre de l'invention ont montré que la conservation du levain dépendait de son pH, de la quantité d'acide lactique, de la quantité d'acide acétique et, également, dans une moindre mesure, de la quantité d'alcool présentes dans le levain.

Seules les formes non dissociées (c'est-à-dire non ionisées) des acides organiques sont capables de traverser la membrane cellulaire des microorganismes; en conséquence, ce sont ces formes qui sont les plus toxiques.

L'équilibre entre la forme non dissociée et la forme ionisée des acides organiques dépend du pH et de leur pKa, le pKa étant le pH auquel chacune des deux formes d'un acide pur représente 50% du total.

Le pKa de l'acide lactique est 3,08 et celui de l'acide acétique est 4,75. Plus le pH est élevé, plus les acides organiques seront sous forme dissociée.

De manière générale, le levain se conserve d'autant mieux que son pH est élevé.

Les essais qui ont été effectués montrent qu'au-dessous de pH 4, il est impossible d'espérer conserver viable une biomasse de bactéries et de levures sans pertes significatives.

Au contraire, la valeur maximum du pH égale à 4,3 a été retenue comme n'étant pas de nature à conduire à une consommation exagérée de soude ou hydroxyde de sodium ou de toute base équivalente comme l'hydroxyde de potassium dans le cadre de l'ensemble du procédé.

Par ailleurs, la conservation de la biomasse dépend de la quantité totale d'acide lactique et d'acide acétique produits, étant entendu que c'est l'acide acétique qui est de loin le plus toxique, compte tenu du fait qu'à pH 4,3, il est majoritairement sous forme non dissociée, contrairement à l'acide lactique qui est en grande partie dissocié à ce pH.

Compte tenu de cette remarque, il est nécessaire que :
- la somme des deux acides dans le levain selon l'invention, prêt à l'emploi, ne dépasse pas 52 g/kg; de préférence, elle est égale ou inférieure à 40 g/kg, plus préférentiellement à 35 g/kg, et plus préférentiellement encore à 30 g/kg,
- dans le levain, une quantité élevée d'acides totaux, c'est-à-dire égale ou supérieure à 35 g/kg, soit associée :
   ◆ à un pH du levain prêt à l'emploi réglé à 4,2, de préférence 4,3,
   ◆ à une teneur en acide acétique égale ou inférieure à 12 g/kg et de préférence à 10 g/kg,
   ◆ à une teneur en alcool égale ou inférieure à 15 g/kg et de préférence égale ou inférieure à 10 g/kg,
- toujours dans le levain, une quantité égale ou supérieure à 10 g/kg d'acide acétique soit associée :
   ◆ à un pH du levain prêt à l'emploi réglé à 4,2, de préférence 4,3,
   ◆ à une teneur totale en acides acétique + lactique égale ou inférieure à 40 g/kg, de préférence égale ou inférieure à 35 g/kg et plus préférentiellement égale ou inférieure à 30 g/kg,
   ◆ à une teneur en alcool égale ou inférieure à 15 g/kg, de préférence égale ou inférieure à 10 g/kg.

La maîtrise de la production d'acides organiques est obtenue expérimentalement par la maîtrise des sucres fermentescibles disponibles.

Elle dépend essentiellement :
◆ de la quantité de sucres fermentescibles apportés lors des multiplications de bactéries lactiques,
◆ de la quantité d'amidon dégradable, essentiellement en maltose ou encore en glucose, présent dans les différentes farines, quantité d'amidon dégradable qui dépendra notamment de la quantité de grains d'amidon endommagés.

Préférentiellement, les amylases sont présentes en excès au départ de la phase levain afin que tous les sucres fermentescibles des farines puissent être libérés pendant cette phase levain, et que la libération résiduelle de sucres fermentescibles durant la conservation soit minimale, cette évolution pouvant être suivie par le dosage des traces résiduelles de sucres fermentescibles présents qui doivent être en permanence, après la fin de la phase levain, inférieurs à 1 pour 1000.

De manière avantageuse, le levain panaire selon l'invention est caractérisé par le fait qu'il contient :
- de 15 à 30 g/kg d'acide lactique
- de 7 à 12 g/kg d'acide acétique, de préférence de 6 à 10 g/kg.

Un levain panaire selon l'invention contenant en tout plus de 35 g d'acides organiques, est généralement un levain qui a été obtenu en mettant en oeuvre à la fin de la phase levain, une technique de concentration.

La production d'alcool doit également être maîtrisée, et la quantité d'alcool ne doit pas, de préférence, dépasser 20 g/kg dans le levain, plus préférentiellement 15 g/kg, et plus préférentiellement encore 10 g/kg.

La production d'alcool est maîtrisée, à côté de l'apport de substrats en quantités limitées comme défini ci-dessus, par le choix des souches de bactéries hétérofermentaires et de levures, et aussi éventuellement par le moment de l'apport des différentes biomasses au levain.

Selon une particularité d'un levain suivant l'invention, celui-ci est ensemencé par une préparation de levures non capables de fermenter le maltose. En particulier, le levain est ensemencé par une souche de levure appartenant à la sous-espèce *Saccharomyces cerevisiae ssp chevalieri*.

Le choix d'une souche de levure ne fermentant pas le maltose permet de limiter la production d'alcool et de favoriser le métabolisme des bactéries au cours de la phase levain pendant laquelle le maltose est le principal sucre fermentescible disponible.

La formation du maltose dans le levain est due à l'attaque par les amylases des grains d'amidon endommagés des farines.

Selon une particularité du levain suivant l'invention, celui-ci est ensemencé par une préparation de bactéries lactiques hétérofermentaires appartenant aux genres *Lactobacillus* ou *Leuconostoc* ou *Pediococcus;* plus particulièrement, le levain est ensemencé par une souche appartenant à l'espèce *Lactobacillus brevis.*

Selon une autre particularité du levain selon l'invention, celui-ci est ensemencé par une préparation de bactéries lactiques hétérofermentaires comme définies ci-dessus, éventuellement par une préparation de levures comme définies ci-dessus, et de plus par une préparation de bactéries lactiques homofermentaires; de préférence, ces dernières appartiennent à l'espèce *Lactobacillus plantarum* ou à l'espèce *Lactobacillus casei.*

Les préparations de bactéries lactiques sont réalisées en fermenteurs stériles et sous conditions stériles sur milieu synthétique classique à pH égal ou supérieur à 5, de préférence à pH 6.

Un ouvrage de base concernant les bactéries lactiques et notamment leur classification, leur métabolisme et leur préparation est l'ouvrage en 2 volumes *"Bactéries lactiques",* coordinateurs H. ROISSART et F.M. LUQUET, Edition Lorica, janvier 1994, référence ISBN 2-9507477-0-1.

Dans le genre ou l'espèce considéré, les souches de bactéries lactiques et de levures sont sélectionnées de manière à permettre une multiplication industrielle et à être autant que possible résistantes au stress créé par les métabolites qu'elles produisent. De nombreuses souches correspondant à ces caractéristiques ont été décrites et/ou peuvent être trouvées dans les centres de collection publique.

La préparation des levures est réalisée par mise en oeuvre des moyens conventionnels, de préférence sur milieu synthétique à base de glucose si le milieu de culture n'est pas séparé de la biomasse de levure en fin de production. Un ouvrage de référence sur les levures est *"Yeast Technology",* G. REED et T. W. NAGODAWITHANA, AVI BOOK (Van Nostrand Reinhold), 1991.

Les préparations liquides de microorganismes ainsi obtenues sont utilisées pour ensemencer le mélange de farine non maltée, de farine maltée et d'eau de manière à constituer le levain, lequel sera traité de manière à obtenir l'ensemble des caractéristiques ci-dessus définies.

Les ensemencements par chaque préparation de microorganismes peuvent être différés dans le temps de manière à favoriser la production de tel ou tel métabolite, ou à réduire la compétition entre les différents microorganismes.

Le procédé conforme à l'invention comporte avantageusement une étape de fermentation de xylose en aérobiose ou de fructose en anaérobiose, en présence de la bactérie lactique hétérofermentaire, afin de favoriser la production d'acide acétique et d'arriver à la teneur souhaitée en cet acide.

Selon un mode de réalisation particulier, le levain contient en tant que farine de céréale non maltée, une farine de seigle, et en tant que farine de céréale maltée, une farine de blé malté, avantageusement dans une proportion de 8 à 12 parts de farine de seigle pour une part de farine de blé malté.

L'ensemble du procédé peut comporter une ou plusieurs étapes de concentration avec séparation de la partie liquide, concentration de celle-ci et réincorporation des composés aromatiques dans la phase concentrée.

Pour éviter tout phénomène de décantation gênant et préjudiciable à sa conservation si le levain liquide est conditionné en volumes importants, le levain est stabilisé avec un stabilisant alimentaire classique comme la gomme xanthane, ou conservé sous agitation lente.

L'invention a également pour objet un pain au levain caractérisé par le fait qu'il a été obtenu selon un schéma direct à l'aide d'un levain suivant l'invention.

De manière préférentielle, la fabrication du levain selon l'invention est réalisée de la manière suivante.

On réalise d'abord une préparation de chacune des bactéries lactiques sélectionnées; pour ce faire, on effectue des cultures successives sur un milieu conventionnel, classique de la multiplication des bactéries lactiques, en fermenteurs stériles; la production en fermenteurs stériles après le stade laboratoire est conduite à pH supérieur à 5, de préférence à pH 6. La régulation du pH est réalisée avec NaOH ou toute autre base comme l'hydroxyde de potassium.

De préférence, la multiplication stérile des bactéries lactiques hétérofermentaires est réalisée en "fed-batch" et en aérobiose; le procédé dit "fed-batch" qu'on peut traduire par "culture discontinue alimentée en continu", consiste à multiplier les bactéries lactiques en discontinu avec apport continu ou sensiblement continu des substances nutritives et notamment du sucre ou des sucres fermentescibles comme le glucose. Le "fed-batch" est conduit de telle manière que la concentration en sucres fermentescibles présents à chaque instant dans le milieu de culture soit comprise de 0,1 g à 1 g/kg.

Les matières premières protéiques, dont principalement l'extrait de levure, sont apportées pendant la première partie de la culture en "fed-batch".

La multiplication des bactéries lactiques homofermentaires peut avoir lieu en "fed-batch" anaérobie ou aérobie.

De préférence, s'il n'a pas été prévu et réalisé une production aérobie d'acide acétique en présence de xylose, on ajoute à la fin de la culture des bactéries lactiques hétérofermentaires ou au moment de la préparation du levain, un excès de fructose pour favoriser la formation en anaérobiose d'acide acétique au début de la fermentation anaérobie du levain.

Cette utilisation de fructose doit de préférence être effectuée en l'absence de levures. Les utilisations de xylose en aérobie et de fructose en anaérobie pour favoriser la production d'acide acétique peuvent être cumulées.

Lorsqu'une seule bactérie lactique est sélectionnée et multipliée, on choisit une bactérie hétérofermentaire.

Une souche de bactérie lactique hétérofermentaire *Lactobacillus brevis* correspondant aux critères de sélection ci-dessus définis est la souche déposée au Centre National de Culture de Microorganisme, Institut Pasteur, 25 rue du Docteur Roux, 75724 Paris cedex 15, sous le n° CNCM I-2002.

Si au moins deux bactéries lactiques sont sélectionnées et multipliées séparément, de préférence l'une sera hétérofermentaire, et la seconde sera homofermentaire. De préférence, la bactérie homofermentaire sera choisie parmi celles de l'espèce *Lactobacillus casei.* De préférence également, cette seconde préparation de bactéries homofermentaires sera encemencée dans le levain après la phase de production d'acide acétique par la bactérie hétérofermentaire.

On réalise parallèlement une préparation de chacune des souches de levures sélectionnées selon les techniques habituelles de culture des levures en utilisant de préférence des sucres purs, notamment du glucose tout au moins au niveau d'un pied de cuve permettant d'avoir des levures aptes à l'ensemencement du levain.

Une souche de levure pouvant être utilisée est la souche de *Saccharomyces chevalieri* NCYC 935, disponible dans la collection publique de la National Collection of Yeast Cultures, Genetics and Microbiology Department, Institute of Food Research, Norwich Research Park Colney, Norwich NR4 7UA, United Kingdom.

Ces préparations liquides de microorganismes sont utilisées pour ensemencer la ou les farine(s) non maltée(s) et préférentiellement en plus la ou les farine(s) maltée(s) qui ont été empâtées avec de l'eau de manière à former une pâte à levain.

Avantageusement, l'eau d'empâtage est apportée au moins partiellement par les préparations de microorganismes.

Ce levain fermente en cuve à environ 30°C pendant 20 à 30 heures, jusqu'à obtenir un levain panaire à pH, mesuré directement dans le levain, stable en conservation entre 4 et 4,3 et de préférence entre 4,1 et 4,3.

Le procédé conforme à l'invention pour la préparation du levain conforme à l'invention est caractérisé par le fait:
- que l'on sélectionne au moins une souche de bactéries lactiques hétérofermentaires, de préférence en plus au moins une souche de levure et, de préférence, éventuellement aussi au moins une souche de bactéries lactiques homofermentaires,
- que l'on effectue séparément la multiplication de chaque souche de bactéries lactiques, ce qui fournit un premier ensemble de préparation(s) de microorganismes,
- que l'on effectue éventuellement séparément la multiplication de chaque souche de levure, ce qui fournit un deuxième ensemble de préparation(s) de microorganismes,
- que l'on ensemence, éventuellement à des moments différents, une pâte liquide obtenue à partir d'eau et d'au moins une farine de céréale non maltée et, de préférence, d'au moins une farine de céréale maltée ou toute source équivalente d'amylases, par la ou les susdites préparations de microorganismes qui, de préférence, apportent tout ou partie de l'eau nécessaire,
- que l'on fait fermenter la pâte ainsi formée jusqu'à épuisement de tous les sucres fermentescibles, ladite pâte contenant assez d'amylases pour dégrader l'ensemble de l'amidon dégradable en maltose et glucose dans un temps compatible avec la maîtrise du procédé,
- que l'on conserve à 4°C la pâte ainsi obtenue en veillant à ce qu'il ne s'opère pas des décantations préjudiciables à sa conservation
étant entendu que l'ensemble du procédé ainsi défini est mené :
- en déterminant et en limitant les apports directs et indirects de sucres fermentescibles de manière à obtenir les productions désirées dans les quantités définies compatibles avec la conservation du levain au pH du levain
- de manière à fournir un levain correspondant à un milieu tamponné au pH désiré.

Ce procédé comporte donc les étapes suivantes :
- multiplication(s) stérile(s) séparée(s) de chaque souche de bactérie lactique en fermenteurs stériles
- éventuellement multiplication(s) séparée(s) de chaque souche de levure
- ensemencement par chaque préparation de microorganismes, éventuellement à des moments différents, d'une pâte liquide composée de farine(s) et d'eau, l'eau pouvant être apportée par la ou les préparations de microorganismes
- fermentation anaérobie en cuve de préférence pendant 15 à 30 heures à environ 30°C de cette pâte de manière à obtenir un levain panaire défini par la composition et les paramètres suivants:
   - biomasse revivifiable de bactéries et de levures
   - quantités d'acide lactique et d'acide acétique présents et en principe n'évoluant plus
   - pH maîtrisé et stable.

Le procédé est à considérer comme un ensemble dans lequel doivent être maîtrisées :
- les différentes étapes de production de biomasse, d'acide lactique, d'acide acétique et d'alcool en fonction :
   - des sucres présents et du métabolisme de chaque souche,
   - des compétitions entre chaque souche qui sont limitées par les multiplications séparées de chaque microorganisme et qui peuvent également l'être par des ensemencements du levain avec chaque préparation de microorganisme à des moments différents
- les apports directs et indirects de sucres fermentescibles, les apports indirects étant sous forme d'amidon dégradable enzymatiquement dans la ou les farines, de manière à ce que les productions désirées de biomasse vivante, d'acide lactique, d'acide acétique, éventuellement d'alcool aient lieu :
   - dans la quantité désirée
   - restent limitées à ces quantités
- les régulations de pH qui sont à faire en amont et qui doivent conduire à l'apport d'une quantité de soude totale suffisante pour que le pH final soit environ 4,2 ou 4,3.

Le levain obtenu à un pH d'environ 4,2 est tamponné par le mélange des sels présents.

A ce pH, une variation de 0,1 point de pH nécessite la production d'environ 3 g/kg d'acide lactique ou d'environ 6 g/kg d'acide acétique. Quand le milieu est épuisé et contient moins de 1 g/kg de sucres fermentescibles dosables, la production d'acides en conservation est inférieure à ces quantités.

Les deux critères essentiels de conduite de l'ensemble du procédé selon l'invention sont la connaissance et la limitation des sucres fermentescibles apportés directement et indirectement de manière à avoir les productions souhaitées et la maîtrise du pH par la soude de manière à arriver à un milieu tamponné au pH désiré.

Dans ce cadre, de nombreuses variantes d'exécution sont possibles.

Par exemple, il est possible de prévoir que la fin de la fermentation du levain ait lieu à 4°C pendant la conservation.

Le levain selon l'invention susceptible d'être obtenu par le procédé ci-dessus défini présente les caractéristiques suivantes, après éventuellement une concentration :
- teneur en matières sèches : 12 à 50%, de préférence 15 à 35%, et encore de préférence 13 à 20%.
- pH stable de 4 à 4,3, de préférence compris entre 4,1 et 4,3, la stabilité étant assurée par un pouvoir tampon tel que un abaissement de 0,1 point pH correspond à l'ajout d'au moins 2 g/kg d'acide lactique, de préférence au moins 3 g/kg d'acide lactique.
- teneur en acide lactique : 10 à 50 g/kg de levain, de préférence 10 à 30 g/kg de levain, et plus préférentiellement 15 à 30 g/kg de levain.
- teneur en acide acétique : au moins 2 g/kg de levain, de préférence de 7 à 15 g/kg de levain, plus préférentiellement de 7 à 12 g/kg de levain, et encore plus préférentiellement de 6 à 10 g/kg de levain.
- teneur totale en acide acétique et acide lactique inférieure ou égale à 52 g/kg, de préférence inférieure ou égale à 40 g/kg, plus préférentiellement inférieure ou égale à 35 g/kg, et encore plus préférentiellement inférieure ou égale à 30 g/kg de levain.
- teneur en sucres fermentescibles : ≤ 1‰, en poids de levain.
- teneur en levures revivifiables : au moins 1.10⁶ cellules, de préférence 5.10⁶ cellules, plus préférentiellement au moins 8.10⁶ cellules par gramme et plus préférentiellement encore au moins 1.10⁷ cellules par gramme.
- teneur en bactéries lactiques revivifiables : au moins 1.10⁹ cellules, de préférence au moins 3.10 ⁹ cellules par gramme et plus préférentiellement au moins 5.10⁹ cellules par gramme.
- durée de la stabilité du produit : au moins 4 semaines à 10°C, de préférence au moins 6 semaines à 4°C et plus préférentiellement au moins 2 mois à 4°C.

Le dénombrement des bactéries lactiques revivifiables est effectué sur gélose MRS (de Man, Rogosa and Sharpe) comme décrit dans le *"Bergey's Manual of Systematic bacteriology",* volume 2, 1986, selon une méthode généralement standardisée, en présence d'actidione (cycloheximide) pour bloquer la croissance des levures.

La méthode préférentiellement employée est celle décrite par la norme internationale ISO 13721-1995(F) Viande et produits à base de viande - Dénombrement des bactéries lactiques - Technique par comptage des colonies à 30°C. Le milieu MRS utilisé est celui commercialisé par SANOFI-PASTEUR. La dose d'actidione est de 50 mg/litre. Elle est incorporée au moment de la préparation des boîtes de Pétri.

Si on veut différencier les bactéries hétérofermentaires des bactéries homofermentaires qui acidifient plus rapidement le milieu, on utilise le colorant BCP (Bromo Cresol Pourpre) à la dose de 2 mg/litre de MRS gélosé.

Le dénombrement des levures est réalisé sur gélose YM (Yeast extract Malt) de qualité DIFCO® additionné d'oxytétracycline à la dose de 100 mg/l pour inhiber la croissance des bactéries selon une méthode généralement standardisée, l'oxytetracycline étant incorporé lors de la préparation des boîtes de Pétri.

Compte tenu des incertitudes bien connues des dénombrements de microorganismes, ces méthodes doivent être soigneusement mises au point et chaque dénombrement doit être répété plusieurs fois (au moins 3 fois) pour obtenir des résultats fiables.

Le levain ainsi réalisé et conservé permet la réalisation d'un pain au levain après fermentation de 6 h d'une pâte ensemencée par ledit levain à environ 15% de la farine mise en oeuvre lors du pétrissage et par un maximum de 0,2% de la levure de panification.

La présente invention est illustrée par les exemples non limitatifs suivants, relatifs à des modes de réalisation avantageux.

### EXEMPLE 1 - Préparation du levain

Dans des fermenteurs stériles, selon les étapes et procédures classiques et sur milieu de type MRS dans lequel notamment l'extrait de viande est remplacé par de l'extrait de levure, on produit une préparation d'une souche de *Lactobacillus brevis,* par exemple la souche CNCM I-2002.

Cette préparation en conditions stériles de la souche CNCM I-2002, après les précultures nécessaires, est réalisée en "fed-batch" en aérobiose, à pH 6, jusqu'à ce qu'on obtienne 10⁹ cellules de bactéries lactiques hétérofermentaires par gramme de préparation liquide. La régulation de pH est assurée par ajout d'une solution de NaOH. Le "fed-batch" est conduit de manière à ce que la concentration en sucres résiduels (glucose et xylose) soit comprise entre 0,1 et 1 g/kg dans le milieu de culture, sauf éventuellement pendant les dernières heures de la culture pendant laquelle les teneurs en glucose peuvent être plus élevées.

La totalité de l'extrait de levure est apportée pendant la première partie de la culture. Le taux de multiplication de la biomasse pendant la dernière heure de la culture est de 1,05 à 1,07.

Parallèlement, on multiplie une souche de levure *Saccharomyces cerevisiae chevalieri,* par exemple la souche NCYC 935 de manière à obtenir une concentration de 10⁸ cellules de levure par gramme en utilisant les procédés classiques de culture des levures.

Alternativement, on peut utiliser une levure sèche obtenue à partir de ladite souche selon les procédés classiques de la levurerie, et réhydratée plusieurs heures dans un milieu agité riche en sucre. C'est dans la pratique, la solution retenue pour réaliser cet exemple.

On mélange 100 kg de farine de seigle type 170, mouture fine, et 10 kg de farine de blé malté avec 80 kg de préparation de levures NCYC 935 à 10⁸ cellules par gramme et 450 kg de préparation de *Lactobacillus brevis* CNCM I-2002 à 10⁹ cellules par gramme.

Cette phase levain est conduite en fermenteur agité, en conditions anaérobies.

Les 640 kg du mélange sont maintenus à 30°C sous agitation pour atteindre un pH de 4,2, ce qui demande environ 18 à 24 heures.

Ce pH de 4,2 reste ensuite pratiquement constant en conservation.

Cette préparation est rapidement refroidie à 4°C et maintenue à 4°C pendant toute la durée de conservation.

On procède de façon telle :
- que la régulation de la phase de multiplication des bactéries lactiques par la solution de soude à pH 6, conduise à un apport d'hydroxyde de sodium suffisant pour d'une part obtenir le pH d'environ 4,2 désiré et d'autre part former avec les acides organiques produits le pouvoir tampon nécessaire, en fin d'élaboration du levain; si tel n'est pas le cas, une régulation de pH avec coulée de solution de soude (hydroxyde de sodium) est nécessaire au début de la phase levain,
- qu'on ait un large excès d'amylases épuisant les farines utilisées pendant la phase levain; il a été vérifié qu'un apport important d'amylases fongiques à un échantillon de produit prélevé en fin de phase levain, et préalablement pasteurisé, ne conduisait pas en deux heures à une augmentation des sucres fermentescibles dosables
- que les quantités de sucres apportés directement sous forme de sucres fermentescibles ou indirectement sous forme d'amidon dégradable conduisent aux quantités souhaitées d'acide lactique et acétique.

Les caractéristiques du levain obtenu sont :
- teneur en matières sèches 15%
- pH (mesure directe ramenée à 20°C) 4,2
- concentration en acide lactique 17 g/kg
- concentration en acide acétique 8 g/kg
- concentration en éthanol 13 g/kg
- sucres fermentescibles ≤ 1 ‰
les mesures de ces concentrations étant faites par HPLC (Chromatographie Liquide Haute Pression), ou par des dosages enzymatiques connus pour la recherche du glucose et du maltose fermentescibles
- pouvoir tampon défini comme la quantité d'acide lactique nécessaire pour abaisser le pH de 0,1 point dans le levain 3,3 g/kg
- pouvoir tampon défini comme la quantité d'acide acétique nécessaire pour abaisser le pH de 0,1 point dans le levain 6,0 g/kg
- teneur en *Lactobacillus brevis* 6.10⁹ UFC par g
- teneur en levure *Saccharomyces cerevisiae chevalieri* 1.10⁷ UFC par g
l'UFC (Unité Formant Colonie) étant le nombre de cellules formant colonie sur un milieu solide de dénombrement approprié des bactéries lactiques d'une part et des levures d'autre part, comme indiqué ci-dessus.

Pour éviter tout phénomène de décantation, le levain liquide ainsi obtenu peut être stabilisé avec environ 0,3% de gomme xanthane, ou conservé sous agitation lente.

### Evolution du levain lors de sa conservation

Cette évolution apparaît à l'examen des résultats réunis dans le Tableau I, à savoir les valeurs du pH et des concentrations en lactobacilles, en levure, en acide lactique et en acide acétique et aux temps zéro ou T° et aux temps zéro plus 4, 6 et 9 semaines de conservation à 4°C.

**TABLEAU I**

| | T° | T° + 4 semaines à 4°C | T° + 6 semaines à 4°C | T° + 9 semaines à 4°C |
|---|---|---|---|---|
| Lactobacillus | 6.10⁹ UFC/g | 5.10⁹ UFC/g | 3.10⁹ UFC/g | 2.10⁹ UFC/g |
| Levure | 1.10⁷ UFC/g | 1.10⁷ UFC/g | 9.10⁶ UFC/g | 8.10⁶ UFC/g |
| Acide lactique | 17 g/kg | 18 g/kg | 18 g/kg | 20 g/kg |
| Acide acétique | 8 g/kg | 8,3 g/kg | 8,5 g/kg | 8,5 g/kg |
| pH | 4,2 | 4,2 | 4,15 | 4,1 |

A l'examen des résultats réunis au Tableau I, on voit que le levain obtenu est resté pratiquement constant en conservation à 4°C pendant 9 semaines.

### EXEMPLE 2 - Préparation de pains au levain

On compare par un test de dégustation des pains préparés à partir de différents types de levains, à savoir:
- un pain au levain fabriqué avec un levain "tout point" traditionnel élaboré sur seigle et apporté à raison de 30 kg de levain "tout point" pour 100 kg de farine (pain 1).
- un pain au levain réalisé avec le levain liquide selon l'exemple 1 utilisé à raison de 15 kg de levain liquide pour 100 kg de farine (pain 2).
- un pain fabriqué avec un levain sec déshydraté et inactif utilisé à 3 kg pour 100 kg de farine (pain 3), n'apportant que des acides organiques et des molécules aromatiques.

Les proportions de levain par rapport à la farine pour les pains 1 à 3 correspondent aux doses d'emploi habituellement préconisées.

Les formules et les diagrammes de préparation de ces pains sont ceux réunis dans le Tableau II.

**TABLEAU II**

| | Pain 1 | Pain 2 | Pain 3 |
|---|---|---|---|
| farine de blé type 55 | 100 | 100 | 100 |
| eau | 60 | 54 | 63 |
| sel | 2 | 2 | 2 |
| levure pressée | 0,2 | 0,2 | 0,2 |
| levain liquide prêt à l'emploi | | 15 | |
| levain traditionnel | 30 | | |
| levain inactif | | | 3 |

Le schéma de fabrication avec 6 heures de fermentation est le suivant :

| | |
|---|---|
| Frasage | 8 minutes en lère vitesse sur pétrin à spirale marque VMI® |
| Pétrissage | 2 minutes en 2ème vitesse sur pétrin à spirale marque VMI® |
| Pointage | 2 h 40 avec un rabat à mi-durée |
| Pesage/boulage | poids pâton 500 g |
| Détente | 15 minutes |
| Façonnage en pain " bâtard " | |
| Apprêt | 3 heures |
| Cuisson | 40 minutes à 235°C avec buée |

### Dosage d'acides sur la mie de pain

Les teneurs en acide lactique et en acide acétique ont été mesurées dans la mie des pains préparés avec les différents levains et sont données dans le Tableau III ci-dessous :

**TABLEAU III**

| | Pain 1 | Pain 2 | Pain 3 |
|---|---|---|---|
| Acide lactique | 4000 ppm | 2700 ppm | 3600ppm |
| Acide acétique | 900 ppm | 1200 ppm | 150 ppm |

### Test de dégustation

Les pains ont également été soumis à un test de dégustation par un ensemble d'experts, les résultats sont donnés dans le Tableau IV ci-après :

**TABLEAU IV**

| | Pain 1 | Pain 2 | Pain 3 |
|---|---|---|---|
| Type de levain | levain traditionnel | levain liquide selon l'exemple 1 | levain sec inactif |
| Aspect croûte | bel aspect, croûte colorée sans excès | bel aspect, coloration brun rouge un peu plus importante que sur le levain naturel | pain plat, terne, manque de tenue et de fermentation |
| Aspect mie | mie ouverte à très ouverte, couleur crème | mie ouverte, couleur crème | mie dense, couleur grise |
| Odeur croûte | note acétique sans excès, sucre cuit, vert rosé | note acétique, sucre cuit, caramel | note brûlé, terre |
| Odeur mie | légèrement acétique, sous bois, pain d'épice | légèrement acétique, pain d'épice, vert pomme | note brûlé |
| Mâche | élastique puis fondant | élastique puis fondant | tassé, collant |
| Goût | légèrement aigrelet, amande, fruité, pain d'épice | acétique sans excès, pain d'épice, fruité, noix de coco | franche acidité, métallique, sans arômes |

### Résultat du test de dégustation des pains préparés avec différents types de levains

La conclusion unanime du jury de dégustation est que le levain liquide prêt à l'emploi de longue conservation permet d'obtenir un pain au levain qui se compare favorablement à un pain au levain traditionnel, bien que le pain obtenu avec le levain liquide selon l'invention ait une acidité totale un peu moindre.

Il est remarquable par ailleurs que le levain prêt à l'emploi selon l'invention est particulièrement intéressant dans des procédés de panification dits en pousse lente.

En effet, utilisé entre 10 et 20% par rapport à la farine avec 0,1% de levure de panification, voire sans aucun ajout de levure de panification, le levain prêt à l'emploi selon l'invention permet de réaliser des fermentations longues de 12 à 24 heures entre 8 et 15°C et d'obtenir rapidement le lendemain avec des opérations minimales une pâte prête à cuire. Le levain prêt à l'emploi selon l'invention, utilisé selon cette technique de pousse lente, permet aux boulangers d'obtenir des pains au levain sans aucun travail de nuit.

### EXEMPLE 3

On réalise un levain selon le protocole de l'exemple 1, si ce n'est qu'on réalise en plus une préparation en conditions stériles d'une souche de *Lactobacillus casei* par "fed-batch" en anaérobie. Cette préparation est séparée de son milieu de culture et ajoutée à l'heure 18 de la phase levain de manière à apporter au levain 1.10⁹ UFC par g de *Lactobacillus casei*.

Cet apport en fin de fermentation levain d'une biomasse de *Lactobacillus casei* est réalisé de manière à ce que la croissance et la production d'acide acétique de la bactérie lactique hétérofermentaire ne soient pas inhibées par le développement de *Lactobacillus casei.* En pratique, les caractéristiques du levain obtenu sont inchangées, mise à part cette biomasse supplémentaire.

Avec ce levain, des pains ont été fabriqués selon le procédé de panification de l'exemple 2 pour les pains 2. Les caractéristiques de ces pains sont comme suit:
- teneur en acide lactique 4300 ppm
- teneur en acide acétique 1200 ppm.

On obtient une composition identique à un pain au levain traditionnel.

## Revendications

1. Levain panaire prêt à l'emploi contenant au moins une farine de céréale non maltée, de préférence en plus au moins une farine de céréale maltée apportant des amylases ou toute source équivalente d'amylases, de l'eau et éventuellement des sucres fermentescibles dosables, ce levain panaire qui a été ensemencé par au moins une préparation de bactéries lactiques hétérofermentaires ainsi qu'éventuellement par au moins une préparation de bactéries lactiques homofermentaires et, de préférence également, par au moins une préparation de levure, étant **caractérisé par le fait**
**que** sa teneur en matière sèche est de 12 à 50%, de préférence comprise entre 15 et 35 %, et plus préférentiellement entre 13 et 20%,
**que** son pH est de 4 à 4,3, de préférence compris entre 4,1 et 4,3,
**qu'**il apporte au moins 1 milliard de bactéries lactiques revivifiables par gramme ainsi que, de préférence, au moins 1 million de levures et de préférence au moins 5 millions de levures revivifiables par gramme pendant au moins 4 semaines, s'il est conservé à moins de 10°C et de préférence à 4°C, la quantité de sucres fermentescibles dosables dans le levain en conservation restant inférieure à 1 pour 1000 en poids, et
**qu'**il permet, après ladite conservation, la fermentation d'une pâte boulangère selon un schéma direct d'obtention de pain au levain.

2. Levain panaire selon la revendication 1, **caractérisé par le fait qu'**il a une durée de conservation d'au moins 6 semaines à 4°C et de préférence de 2 mois à 4°C.

3. Levain panaire selon l'une quelconque des revendications 1 et 2, **caractérisé par le fait que** sa teneur en acide lactique est d'au moins 10 g et d'au plus 50 g par kg, de préférence comprise entre 10 et 30 g/kg et plus préférentiellement entre 15 et 30 g/kg.

4. Levain panaire selon l'une quelconque des revendications 1 à 3, **caractérisé par le fait que** sa teneur en acide acétique est d'au moins 2 g et d'au plus 15 g par kg, de préférence comprise entre 7 et 15 g/kg, plus préférentiellement entre 7 et 12 g/kg, et plus préférentiellement encore entre 6 et 10 g par kg

5. Levain panaire selon l'une quelconque des revendications 1 à 4, **caractérisé par le fait que** l'acide acétique et l'acide lactique sont dans un rapport au moins égal à 30 %, si sa teneur en acide lactique est égale ou inférieure à 30 g par kg.

6. Levain panaire selon l'une quelconque des revendications 1 à 5, **caractérisé par le fait que** la somme des quantités d'acide lactique et d'acide acétique est au maximum de 52 g, de préférence au maximum de 40 g, plus préférentiellement au maximum de 35 g, et plus préférentiellement encore au maximum de 30 g par kg.

7. Levain panaire selon l'une quelconque des revendications 1 à 6, **caractérisé par le fait qu'**il contient par kg
de 15 à 30 g d'acide lactique
de 7 à 12 g d'acide acétique, de préférence de 6 à 10 g.

8. Levain panaire selon l'une quelconque des revendications 1 à 7, **caractérisé par le fait que** son pH est d'environ 4,2 et qu'il présente un pouvoir tampon tel qu'il faut au moins 2 g et de préférence 3 g d'acide lactique par kg de levain pour entraîner une baisse de pH de 0,1 unité.

9. Levain panaire selon l'une des revendications 1 à 8, **caractérisé par le fait que** la farine de céréale non maltée est une farine de seigle, que la farine de céréale maltée est une farine de blé malté et que ces farines sont dans une proportion de 8 à 12 parts de farine de seigle pour une part de farine de blé malté.

10. Procédé de préparation du levain panaire longue conservation prêt à l'emploi selon l'une des revendications 1 à 9, **caractérisé par le fait :**
• **que** l'on sélectionne au moins une souche de bactéries lactiques hétérofermentaires, de préférence en plus au moins une souche de levure et, de préférence, éventuellement au moins une souche de bactéries lactiques homofermentaires,
• **que** l'on effectue séparément la multiplication de chaque souche de bactéries lactiques, ce qui fournit un premier ensemble de préparation(s) de microorganismes,
• **que** l'on effectue éventuellement séparément la multiplication de chaque souche de levure, ce qui fournit un deuxième ensemble de préparation(s) de microorganismes,
• **que** l'on ensemence, éventuellement à des moments différents, une pâte liquide obtenue à partir d'eau et d'au moins une farine de céréale non maltée et, de préférence, d'au moins une farine de céréale maltée ou toute source équivalente d'amylases, par la ou les susdites préparations de microorganismes qui, de préférence, apportent tout ou partie de l'eau nécessaire,
• **que** l'on fait fermenter la pâte ou levain ainsi formé jusqu'à épuisement de tous les sucres fermentescibles, ladite pâte contenant assez d'amylases pour dégrader l'ensemble de l'amidon dégradable en maltose et glucose dans un temps compatible avec la maîtrise du procédé,
• **que** l'on conserve à environ 4°C la pâte ainsi obtenue en veillant à ce qu'il ne s'opère pas des décantations préjudiciables à sa conservation,
étant entendu que l'ensemble du procédé ainsi défini est mené :
- en déterminant et en limitant les apports directs et indirects de sucres fermentescibles de manière à obtenir les productions désirées dans les quantités définies compatibles avec la conservation du levain au pH du levain
- de manière à fournir un levain correspondant à un milieu tamponné au pH désiré.

11. Procédé selon la revendication 10, **caractérisé par le fait que** les souches de bactéries lactiques hétérofermentaires appartiennent au genre *Lactobacillus* ou *Leuconostoc* ou *Pediococcus*.

12. Procédé selon la revendication 11, **caractérisé par le fait que** la souche de bactéries lactiques hétérofermentaires appartient à l'espèce *Lactobacillus brevis* et est de préférence la souche déposée au CNCM sous le n° I-2002.

13. Procédé selon l'une des revendications 10 à 12, **caractérisé par le fait que** si au moins deux souches de bactéries lactiques sont soumises à la multiplication, l'une d'elles est une souche de bactérie lactique hétérofermentaire et l'autre est une souche de bactérie lactique homofermentaire de préférence du type *Lactobacillus plantarum* ou *Lactobacillus casei,* et plus préférentiellement du type *Lactobacillus casei*.

14. Procédé selon l'une quelconque des revendications 10 à 13, **caractérisé par le fait que** la souche levure utilisée n'est pas capable de fermenter le maltose.

15. Procédé selon la revendication 14, **caractérisé par le fait que** la souche de levure utilisée appartient à la sous-espèce *Saccharomyces cerevisiae var. chevalieri*.

16. Procédé selon l'une des revendications 10 à 13, **caractérisé par le fait que** chaque préparation de bactéries lactiques est réalisée en fermenteurs stériles à pH égal ou supérieur à 5, de préférence à pH 6 avec régulation du pH à l'aide d'une solution de soude.

17. Procédé selon la revendication 16, **caractérisé par le fait que** chaque préparation de bactéries lactiques est réalisée en « fed-batch », le procédé de « fed-batch » consistant à multiplier les bactéries lactiques en discontinu avec apport continu de sucres fermentescibles.

18. Procédé selon l'une des revendications 16 à 17, **caractérisé par le fait que** chaque préparation de bactéries hétérofermentaires est réalisée en aérobiose.

19. Procédé selon l'une des revendications 10 à 18, **caractérisé par le fait qu'**il comporte une étape de fermentation du fructose en anaérobiose et/ou de xylose en aérobiose en présence de la bactérie lactique hétérofermentaire.

20. Procédé d'obtention d'un pain au levain selon un schéma direct, **caractérisé par le fait qu'**on utilise un levain objet d'une des revendications 1 à 9.

21. Procédé selon la revendication 20, **caractérisé par le fait que** le pain au levain est réalisé par un schéma de pousse lente.

## Claims

1. Ready-to-use baker's leaven comprising at least one non malted grain flour, preferably at least one malted grain flour providing amylases, or any other equivalent source of amylases, and water, and possibly fermentable sugars, said baker's leaven which has been seeded with at least one preparation of heterofermentative lactic bacteria, possibly with at least one preparation of homofermentative lactic bacteria and, preferably, with at least one preparation of yeast, being **characterized by**
its dry matter content is from 12 to 50%, preferably comprised between 15 and 35%, and still more preferably between 13 and 20%,
its pH is from 4 to 4.3, preferably comprised between 4.1 and 4.3,
it contains at least 1 billion of revivable lactic bacteria per gram and also preferably at least 1 million and preferably at least 5 millions of revivable yeasts per gram during at least 4 weeks, if it is preserved at a temperature lower than 10°C and preferably at 4°C, the amount of fermentable sugar being inferior to 1 per 1000 per weight of leaven and,
it is able to ferment and raise a baker's dough in a direct breadmaking process after said preservation.

2. Baker's leaven according to Claim 1, **characterized by** the fact that it can be preserved for at least 6 weeks at 4°C and preferably 2 months at 4°C.

3. Baker's leaven according to any one of Claims 1 to 2, **characterized by** the fact that it contains lactic acid in an amount of at least 10 g and not higher than 50 g per kg of leaven, preferably comprising between 10 and 30 g/kg of leaven and still more preferably between 15 and 30 g/kg of leaven.

4. Baker's leaven according to any one of Claims 1 to 3, **characterized by** the fact that it contains acetic acid in an amount of at least 2 g and of at most 15 g per kg of leaven, preferably comprised between 7 and 15 g/kg of leaven, more preferably between 7 and 12 g/kg of leaven and still more preferably between 6 and 10 g/kg of leaven.

5. Baker's leaven according to any one of Claims 1 to 4, **characterized by** the fact that it contains a mixture of acetic acid and of lactic acid wherein the ratio of acetic acid with respect to lactic acid is at least 30%, provided that the content in lactic acid is equal to or lower than 30 g per kg of leaven.

6. Baker's leaven according to any one of Claims 1 to 5, **characterized by** the fact that the sum of the amounts of lactic and of acetic acid is not higher than 52 g of leaven, preferably not higher than 40 g of leaven, more preferably not higher that 35 g of leaven and still more preferably not higher than 30 g per kg of leaven.

7. Baker's leaven according to any one of Claims 1 to 6, **characterized by** the fact that each kg of leaven contains
from 15 to 30 g of lactic acid and
from 7 to 12 g, preferably from 6 to 10 g of acetic acid.

8. Baker's leaven according to any one of Claims 1 to 7, **characterized by** the fact that it retains a pH of about 4.2 and that it has a buffering power such that the introduction of at least 2 g and preferably 3 g of lactic acid par kg of leaven is necessary to lower the pH of the leaven by 0.1.

9. Baker's leaven according to any one of Claims 1 to 8, **characterized by** the fact that the non malted grain flour is a rye flour, the malted grain flour is a malted wheat flour, these flours being within a ratio of 8 to 12 parts of non water rye flour per part of malted wheat flour.

10. Process for the production of a long-term preservation ready-to-use baker's leaven according to one of claims 1 to 9, **characterized by** the fact that it comprises the following steps:
■ selection of at least one strain of heterofermentative lactic bacteria, preferably of at least one strain of yeast and, possibly, of at least one strain of homofermentative lactic bacteria,
■ separate multiplication of each strain of lactic bacteria, thus providing a first group of preparation(s) of microorganisms,
■ possible separate multiplication of each yeast strain, thus providing a second group of preparation(s) of microorganisms,
■ seeding, possibly at different moments, with the above said preparation(s) of microorganism(s) a dough obtained starting from water and at least one non malted grain flour and preferably at least one malted grain flour or any other equivalent source of amylases, fermenting the thus obtained dough or leaven until consumption of all fermentable sugars, the said dough containing a sufficient amount of amylases sufficient for the degradation of the totality of the degradable starch into maltose and into glucose within a time which is compatible with the control of the process,
■ preservation at 4°C of the thus obtained dough wherein no decantation detrimental to its preservation should occured,
the thus defined process being conducted:
- with determination and limitation of direct and indirect introduction of fermentable sugars so as to obtain requested productions in defined amounts which are compatible with the preservation of the leaven at the pH of the leaven,
- so as to provide a medium buffered at a requested pH in the leaven.

11. Process according to Claim 10, **characterized by** the fact that the strains of heterofermentative lactic bacteria belong to the genus *Lactobacillus* ou *Leuconostoc* or *Pedioccocus.*

12. Process according to Claim 10, **characterized by** the fact that the strain belongs to the *Lactobacillus brevis* strains and preferably to the strain deposited at CNCM under the number I-2002.

13. Process according to any one of Claims 10 to 12, **characterized by** the fact that, if at least two strains of lactic bacteria are multiplied, one of them belonging to a heterofermentative lactic bacteria strain and another to a homofermentative lactic bacteria strain, preferably belonging to the *Lactobacillus plantarum* or *Lactobacillus casei* strains, and more preferably to the *Lactobacillus casei* strains.

14. Process according to any one of Claims 10 to 13, **characterized by** the fact that the yeast strain which is used is not able to fermente maltose.

15. Process according to Claim 14, **characterized by** the fact that the yeast strain which is used belongs to the subspecies *Saccharomyces cerevisiae var. chevalieri.*

16. Process according to any one of Claims 10 to 13, **characterized by** the fact that each preparation of lactic bacteria is carried out in sterile fermentors and under sterile conditions at a pH equal to or higher than 5, preferably at pH 6 with regulation of the pH using a solution of NaOH.

17. Process according to Claim 16, **characterized by** the fact that each preparation of lactic bacteria is carried out in "a fed-batch" process consisting in a discontinuous multiplication of lactic bacteria with a continuous introduction of fermentable sugars.

18. Process according to one of Claims 17 or 18, **characterized by** the fact that each preparation of heterofermentative bacteria obtained under aerobic conditions.

19. Process according to any one of Claims 10 to 18, **characterized by** the fact that it comprises a step of fermentation of fructose under anaerobic conditions and/or of xylose under aerobic conditions in the presence of the heterofermentative lactic bacteria.

20. Process for the production of leavened bread in a direct breadmaking process, by fermentation with a leaven according to any one of Claims 1 to 9.

21. Process according to claim 20, **characterized by** the fact that it is obtained by a slow proof step.

## Patentansprüche

1. Gebrauchsfertiger Brotsauerteig, enthaltend mindestens ein nicht-gemalztes Getreidemehl, bevorzugt zusätzlich mindestens ein gemalztes Getreidemehl, das Amylasen oder eine beliebige äquivalente Quelle für Amylasen enthält, Wasser und gegebenenfalls fermentierbare dosierbare Zucker, wobei dieser Brotsauerteig, welcher angeimpft worden ist mit mindestens einer Präparation von heterofermentierenden Milchbakterien sowie gegebenenfalls mindestens einer Präparation von homofermentierenden Milchbakterien, und ebenfalls bevorzugt mindestens einer Präparation von Hefen, **dadurch gekennzeichnet ist dass** sein Trockenmassegehalt 12 bis 50 % beträgt, bevorzugt zwischen 15 und 35 %, und stärker bevorzugt zwischen 13 und 20 % liegt,
dass sein pH-Wert 4 bis 4,3 beträgt, bevorzugt zwischen 4,1 und 4,3 liegt, dass er mindestens 1 Milliarde lebensfähige Milchbakterien pro Gramm, sowie bevorzugt mindestens 1 Million Hefen und bevorzugt mindestens 5 Millionen lebensfähige Hefen pro Gramm, während mindestens 4 Wochen enthält, wenn er bei weniger als 10°C und bevorzugt bei 4°C aufbewahrt wird, wobei die Menge an fermentierbaren dosierbaren Zuckern in dem Sauerteig während der Aufbewahrung bei unter 1 pro 1000, bezogen auf Gewicht, bleibt,
dass er nach der Aufbewahrung die Fermentation eines Backteigs gemäß einem direkten Schema zum Erhalt eines Sauerteigbrots ermöglicht.

2. Brotsauerteig nach Anspruch 1, **dadurch gekennzeichnet, dass** er eine Haltbarkeitsdauer von mindestens 6 Wochen bei 4°C und bevorzugt von mindestens zwei Monaten bei 4°C hat.

3. Brotsauerteig nach einem der Ansprüche 1 und 2, **dadurch gekennzeichnet, dass** sein Milchsäuregehalt mindestens 10 g und höchstens 50 g pro kg beträgt, bevorzugt zwischen 10 und 30 g/kg und stärker bevorzugt zwischen 15 und 30 g/kg liegt.

4. Brotsauerteig nach einem der Ansprüche 1 bis 3, **dadurch gekennzeichnet, dass** sein Essigsäuregehalt mindestens 2 g und höchstens 15 g pro kg beträgt, bevorzugt zwischen 7 und 15 g/kg, stärker bevorzugt zwischen 7 und 12 g/kg und noch stärker bevorzugt zwischen 6 und 10 g/kg liegt.

5. Brotsauerteig nach einem der Ansprüche 1 bis 4, **dadurch gekennzeichnet, dass** die Essigsäure und die Milchsäure in einem Verhältnis von mindestens gleich 30 % vorhanden sind, wenn sein Milchsäuregehalt gleich oder kleiner 30 g pro kg beträgt.

6. Brotsauerteig nach einem der Ansprüche 1 bis 5, **dadurch gekennzeichnet, dass** die Summe der Mengen an Milchsäure und Essigsäure pro kg höchstens 52 g beträgt, bevorzugt höchstens 40 g, stärker bevorzugt höchstens 35 g und noch stärker bevorzugt höchstens 30 g.

7. Brotsauerteig nach einem der Ansprüche 1 bis 6, **dadurch gekennzeichnet, dass** er pro kg
15 bis 30 g Milchsäure,
7 bis 12 g Essigsäure, bevorzugt 6 bis 10 g, enthält.

8. Brotsauerteig nach einem der Ansprüche 1 bis 7, **dadurch gekennzeichnet, dass** sein pH-Wert etwa 4,2 beträgt, und dass er ein Puffervermögen aufweist, so dass mindestens 2 g, bevorzugt 3 g Milchsäure pro kg Sauerteig erforderlich sind, um eine pH-Erniedrigung von 0,1 Einheiten zu bewirken.

9. Brotsauerteig nach einem der Ansprüche 1 bis 8, **dadurch gekennzeichnet, dass** das nicht-gemalzte Getreidemehl ein Roggenmehl ist, das gemalzte Getreidemehl ein gemalztes Weizenmehl ist, und dass diese Mehle in einem Verhältnis von 8 bis 12 Teilen Roggenmehl pro einem Teil gemalztem Weizenmehl vorhanden sind.

10. Verfahren zur Herstellung eines gebrauchsfertigen Brotsauerteigs mit langer Haltbarkeit nach einem der Ansprüche 1 bis 9, **dadurch gekennzeichnet:**
• **dass** man mindestens einen heterofermentierenden Milchbakterienstamm auswählt, bevorzugt zusätzlich mindestens einen Hefestamm und bevorzugt gegebenenfalls mindestens einen homofermentierenden Milchbakterienstamm,
• **dass** man separat die Vermehrung jedes Milchbakterienstamms bewirkt, was eine erste Einheit von einer oder mehreren Mikroorganismenpräparationen ergibt,
• **dass** man gegebenenfalls separat die Vermehrung jedes Hefestamms bewirkt, was eine zweite Einheit von einer oder mehreren Mikroorganismenpräparationen ergibt,
• **dass** man, gegebenenfalls zu unterschiedlichen Zeitpunkten, eine flüssige Paste, erhalten aus Wasser und mindestens einem nicht-gemalztem Getreidemehl, und bevorzugt mindestens einem gemalzten Getreidemehl oder einer beliebigen äquivalenten Amylasequelle, mit der oder den Mikroorganismenpräparationen animpft, weiche bevorzugt das gesamte erforderliche Wasser oder einen Teil davon enthalten,
• **dass** man den derart gebildeten Teig oder Sauerteig fermentieren lässt bis alle fermentierbaren Zucker verbraucht sind, wobei der Teig ausreichend Amylasen enthält, um die gesamte abbaubare Stärke zu Maltose und Glucose abzubauen, in einem Zeitraum, der mit dem Verfahrensprotokoll kompatibel ist,
• **dass** man den derart erhaltenen Teig bei etwa 4°C aufbewahrt, wobei darauf geachtet wird, dass keine für seine Aufbewahrung nachteiligen Absetzvorgänge auftreten,
wobei verstanden wird, dass das gesamte derart definierte Verfahren durchgeführt wird:
- unter Bestimmung und Begrenzung der direkten und indirekten Zufuhren von fermentierbaren Zuckern auf eine Weise, um die gewünschten, mit der Aufbewahrung des Sauerteigs bei dem pH-Wert des Sauerteigs kompatiblen Produktionen in den definierten Mengen zu erhalten,
- auf eine Weise, um einen Sauerteig zu liefern, der einem gepufferten Milieu bei dem gewünschten pH-Wert entspricht.

11. Verfahren nach Anspruch 10, **dadurch gekennzeichnet, dass** die heterofermentierenden Milchbakterienstämme der Gattung *Lactobacillus* oder *Leuconostoc* oder *Pediococcus* angehören.

12. Verfahren nach Anspruch 11, **dadurch gekennzeichnet, dass** der heterofermentierende Milchbakterienstamm der Art *Lactobacillus brevis* angehört und bevorzugt der beim CNCM unter der Nummer 1-2002 hinterlegte Stamm ist.

13. Verfahren nach einem der Ansprüche 10 bis 12, **dadurch gekennzeichnet, dass** mindestens zwei Milchbakterienstämme vermehrt werden, wobei einer davon ein heterofermentierender Milchbakterienstamm ist und der andere ein homofermentierender Milchbakterienstamm, bevorzugt des Typs *Lactobacillus plantarum* oder *Lactobacillus casei,* und stärker bevorzugt des Typs *Lactobacillus casei* ist.

14. Verfahren nach einem der Ansprüche 10 bis 13, **dadurch gekennzeichnet, dass** der verwendete Hefestamm Maltose nicht fermentieren kann.

15. Verfahren nach Anspruch 14, **dadurch gekennzeichnet, dass** der verwendete Hefestamm der Unterart *Saccharomyces cerevisiae var. chevalieri* angehört.

16. Verfahren nach einem der Ansprüche 10 bis 13, **dadurch gekennzeichnet, dass** jede Milchbakterienpräparation in sterilen Fermentiervorrichtungen bei einem pH-Wert gleich oder größer als 5, bevorzugt als pH 6 durchgeführt wird, unter Steuerung des pH-Werts mittels einer Sodalösung.

17. Verfahren nach Anspruch 16, **dadurch gekennzeichnet, dass** jede Milchbakterienpräparation im "fed-batch" durchgeführt wird, wobei das "fedbatch"-Verfahren aus einer diskontinuierlichen Vermehrung der Milchbakterien unter kontinuierlicher Zufuhr von fermentierbaren Zuckern besteht.

18. Verfahren nach einem der Ansprüche 16 bis 17, **dadurch gekennzeichnet, dass** jede Präparation von heterofermentierenden Bakterien anaerob durchgeführt wird.

19. Verfahren nach einem der Ansprüche 10 bis 18, **dadurch gekennzeichnet, dass** es einen anaeroben Fructosefermentationsschritt oder einen aeroben Xylosefermentationsschritt in Gegenwart der heterofermentierenden Bakterie umfasst.

20. Verfahren zum Erhalt eines Sauerteigbrots gemäß einem direkten Schema, **dadurch gekennzeichnet, dass** man einen Sauerteig nach einem der Ansprüche 1 bis 9 verwendet.

21. Verfahren nach Anspruch 20, **dadurch gekennzeichnet, dass** das Sauerteigbrot durch ein Schema mit langsamem Gehen Lassen hergestellt wird.
